# EUROPEAN PATENT SPECIFICATION

(11) **EP 3 570 214 B1**
(45) Date of publication and mention of the grant of the patent: **29.11.2023**
(21) Application number: 19187114.4
(22) Date of filing: 18.07.2019
(51) Int. Cl.: B60W 40/06, G06N 3/045, G06N 3/047, G06V 10/25, G06V 10/44, G06V 10/764, G06V 10/82, G06V 20/58

(54) **AUTOMOBILE IMAGE PROCESSING METHOD AND APPARATUS, AND READABLE STORAGE MEDIUM**
BILDVERARBEITUNGSVERFAHREN UND -VORRICHTUNG FÜR AUTOMOBIL UND LESBARES SPEICHERMEDIUM
PROCÉDÉ ET APPAREIL DE TRAITEMENT D'IMAGES AUTOMOBILES ET SUPPORT D'ENREGISTREMENT LISIBLE

(30) Priority: 12.09.2018 CN 201811062068
(43) Date of publication of application: 20.11.2019
(73) Proprietor: Apollo Intelligent Driving Technology (Beijing) Co., Ltd., Haidian District Beijing 100085 (CN)
(72) Inventor: CHEN, Jiajia, Beijing, Beijing 100085 (CN); WAN, Ji, Beijing, Beijing 100085 (CN); XIA, Tian, Beijing, Beijing 100085 (CN)
(74) Representative: Lam, Alvin

(56) References cited:
- EP-A1- 3 176 666
- US-A1- 2017 371 347
- US-A1- 2018 232 585

## Description

### TECHNICAL FIELD

The present invention relates to self-driving technology and, in particular, to an automobile image processing method and apparatus, and a readable storage medium.

### BACKGROUND

With the development of science and technology and the progress of society, self-driving technology has become a trend in the field of transportation. A plurality of driving strategies are preset in a self-driving device, and the self-driving device can determine, according to the current road condition, a driving strategy that matches the current road condition, so as to perform a self-driving task. In the above process, how to enable the self-driving device to accurately identify various road conditions becomes the focus of the research.

In order to identify the road condition, the self-driving device needs to know the behavior of other vehicles in its environment. However, in the prior art, there is no effective method for identifying the behavior of other vehicles, which causes the self-driving device to be unable to respond to the road condition with a driving strategy accurately, thereby seriously affecting the safety and reliability of the self-driving.

US2017/0371347 A1 describes systems and methods for navigating an autonomous vehicle, in one implementation, a system for navigating a host vehicle based on detecting a door opening event may include at least one processing device. The processing device may be programed to receive at least one image associated with the environment of the host vehicle and analyze the at least one image to identify a side of a parked vehicle.

### SUMMARY

The present invention is defined in the appended set of claims. The present invention provides an automobile image processing method and apparatus, and a readable storage medium, in view of the above problem in the prior art that there is no effective method for identifying the behavior of other vehicles, which causes a self-driving device to be unable to respond to the road condition with a driving strategy accurately, thereby seriously affecting the safety and reliability of the self-driving.

### BRIEF DESCRIPTION OF THE DRAWINGS

Embodiments of the present disclosure have been shown in the drawings and will be described in more detail below. The drawings and the description are not intended to limit the scope of the present disclosure in any way, but to illustrate the concept of the present disclosure to those skilled in the art by referring to specific embodiments.
FIG. 1 is a schematic diagram of a network architecture on which the present disclosure is based;
FIG. 2 is a schematic flowchart of an automobile image processing method according to a first embodiment of the present invention;
FIG. 3 is a schematic flowchart of an automobile image processing method;
FIG. 4 is a schematic structural diagram of an automobile image processing apparatus according to a third embodiment of the present invention; and
FIG. 5 is a schematic diagram of a hardware structure of an automobile image processing apparatus.

The accompanying drawings, which are incorporated into the specification and constitute part of the specification, illustrate embodiments in accordance with the present disclosure and, together with the specification, serve to explain the principles of the present disclosure.

### DESCRIPTION OF EMBODIMENTS

In order to make the objects, technical solutions and advantages of embodiments of the present invention clearer, the technical solutions of the embodiments of the present invention will be described below clearly and completely in conjunction with the accompanying drawings in the embodiments of the present invention.

With the development of science and technology and the progress of society, self-driving technology has become a trend in the field of transportation. A plurality of driving strategies are preset in a self-driving device, and the self-driving device can determine, according to the current road condition, a driving strategy that matches the current road condition, so as to perform a self-driving task. In the above process, how to enable the self-driving device to accurately identify various road conditions becomes the focus of the research.

In order to identify the road condition, the self-driving device needs to know the behavior of other vehicles in its environment. However, in the prior art, there is no effective method for identifying the behavior of other vehicles, which causes the self-driving device to be unable to respond to the road condition with a driving strategy accurately, thereby seriously affecting the safety and reliability of the self-driving.

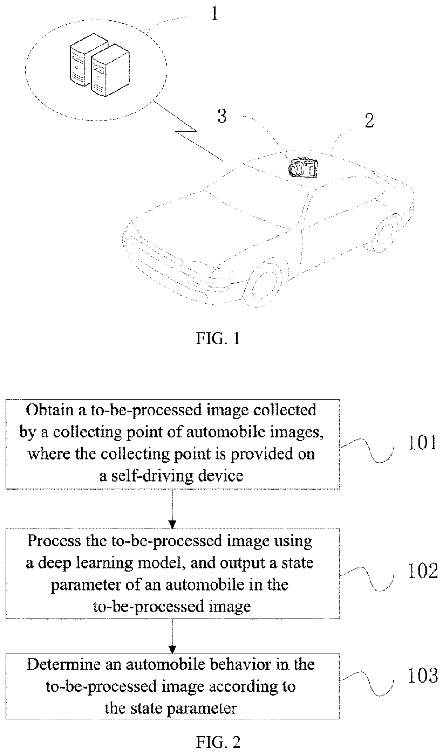

It should be noted that, in order to better explain the present application, FIG. 1 provides a schematic diagram of a network architecture on which the present invention is based. As shown in FIG. 1, an automobile image processing method provided by the present invention may be specifically executed by an automobile image processing apparatus 1. The network architecture, on which the automobile image processing apparatus 1 is based, further includes a self-driving device 2 and a collecting point 3 provided on the self-driving device. The automobile image processing apparatus 1 may be implemented by means of hardware and/or software. The automobile image processing apparatus 1 can communicate, and perform data interaction, with the self-driving device 2 and the collecting point 3 via a wireless local area network. In addition, the automobile image processing apparatus 1 may be provided on the self-driving device 2, or may be provided in a remote server. The collecting point 3 includes, but is not limited to, an automobile data recorder, a smartphone, an in-vehicle image monitoring device, etc.

FIG. 2 is a schematic flowchart of an automobile image processing method according to a first embodiment of the present invention.

As shown in FIG. 2, the automobile image processing method includes the following steps.

Step 101: obtain a to-be-processed image collected by a collecting point of automobile images, where the collecting point is provided on a self-driving device.

Step 102: process the to-be-processed image using a deep learning model, and output a state parameter of an automobile in the to-be-processed image.

Step 103: determine an automobile behavior in the to-be-processed image according to the state parameter.

In order to solve the above problem in the prior art that there is no effective method for identifying the behavior of other vehicles, which causes a self-driving device to be unable to respond to the road condition with a driving strategy accurately, thereby seriously affecting the safety and reliability of the self-driving, the first embodiment of the present invention provides an automobile image processing method. First, an automobile image processing apparatus can receive a to-be-processed image sent by the collecting point provided on the self-driving device, where the to-be-processed image may be specifically an image including automobile image information such as an automobile shape or an automobile profile.

Then the automobile image processing apparatus processes the to-be-processed image using a deep learning model to output the state parameter of the automobile in the to-be-processed image. It should be noted that if there are a plurality of automobiles in the to-be-processed image, then correspondingly, the outputted state parameter of the automobile in the to-be-processed image includes the state parameter of each of the plurality of automobiles. Furthermore, the deep learning model includes, but is not limited to, a neural belief network model, a convolutional neural network model, and a recursive neural network model. Before processing the automobile image according to this embodiment, a deep learning network architecture for identifying and outputting the state parameter of the automobile in the image can also be pre-constructed, and training samples are obtained by means of collecting a large number of training images and annotating, for the constructed deep learning network architecture to learn and train, so as to obtain the deep learning model on which this embodiment is based.

Finally, the automobile image processing apparatus determines the automobile behavior in the to-be-processed image according to the state parameter. Specifically, the automobile behavior determined according to the state parameter includes one of the following: a braking behavior, a traveling behavior, a steering behavior, and a parking behavior.

In this embodiment, the state parameter of the automobile in the to-be-processed image which is outputted from the deep learning model is used to indicate one or more of the following automobile states: a brake lamp state, a steering lamp state, a door state, a trunk door state, and a wheel pointing direction state.

The brake lamp state and the steering lamp state are used to indicate whether a brake lamp and a steering lamp are on or off, where the steering lamp state may be further divided into a left steering lamp state and a right steering lamp state. The door state and the trunk door state are used to indicate whether a door and a trunk door are open or closed; where the door state may be further divided into a left-front door state, a left-rear door state, a right-front door state, and a right-rear door state. Of course, the door state may also be divided into a left door state and a right door state depending on the automobile type. The wheel pointing direction state is used to indicate the orientation of a wheel, which generally refers to the orientation of a steering wheel, i.e., the orientation of a front wheel. By outputting the above state parameter(s), it is possible to effectively provide a determination basis for determining the braking behavior, the traveling behavior, the steering behavior, and the parking behavior of the automobile.

Further, for example, if the brake lamp state outputted from the deep learning model is on, then it can be determined that the automobile has a braking behavior; if the door state and/or the trunk door state outputted from the deep learning model are open, then it can be determined that the automobile has a parking behavior; if the wheel pointing direction state outputted from the deep learning model indicates that the orientation of a front wheel is not consistent with the orientation of a rear wheel, it is determined that the automobile has a steering behavior; and of course, if the deep learning model outputs other automobile states, then the automobile may be in a normal traveling behavior.

The state parameter of the automobile in the to-be-processed image which is outputted from the deep learning model further includes: an automobile measurement size, and/or, a distance between the automobile and the collecting point for collecting the image of the automobile.

Specifically, in order to better determine the automobile behavior, the state parameter outputted from the deep learning model further includes the automobile measurement size and/or the distance between the automobile and the collecting point. These two behavior parameters can make the determined automobile behavior more accurate. For example, when the value of the distance between the automobile and the collecting point for collecting the image of the automobile is obtained as relatively small, it is determined that the automobile has a braking behavior.

Using the automobile image processing method provided by the first embodiment of the present invention, the to-be-processed image collected by the collecting point of automobile images is obtained, where the collecting point is provided on the self-driving device; the to-be-processed image is processed using the deep learning model, and the state parameter of the automobile in the to-be-processed image is outputted; and the automobile behavior in the to-be-processed image is determined according to the state parameter. Thus the to-be-processed image collected by the collecting point can be processed using the deep learning model to obtain the state parameter for determining the automobile behavior, and thus the automobile behavior can be obtained, thereby providing a foundation and a basis for the self-driving device to adjust the driving strategy according to the road condition.

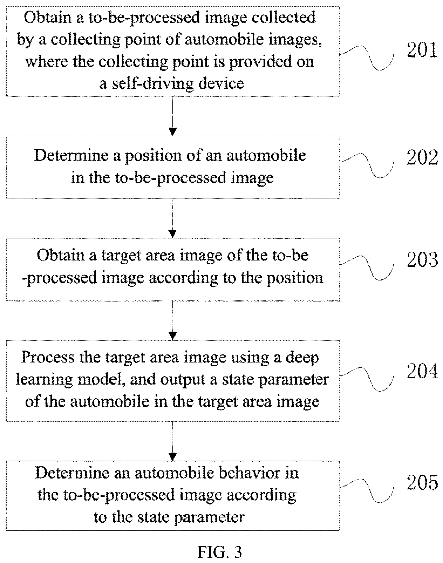

FIG. 3 is a schematic flowchart of an automobile image processing method.

As shown in FIG. 3, the automobile image processing method includes the following steps.

Step 201: obtain a to-be-processed image collected by a collecting point of automobile images, where the collecting point is provided on a self-driving device.

Step 202: determine a position of an automobile in the to-be-processed image.

Step 203: obtain a target area image of the to-be-processed image according to the position.

Step 204: process the target area image using a deep learning model, and output a state parameter of the automobile in the target area image.

Step 205: determine an automobile behavior in the to-be-processed image according to the state parameter.

Similarly to the first embodiment, in this method, an automobile image processing apparatus can receive a to-be-processed image sent by the collecting point provided on the self-driving device, where the to-be-processed image may be specifically an image including automobile image information such as an automobile shape or an automobile profile.

The difference between the first embodiment and this method lies in that the automobile image processing apparatus of this method processes the to-be-processed image using the deep learning model to output the state parameter of the automobile in the to-be-processed image specifically by the following steps.

First, the position of the automobile in the to-be-processed image is determined. Specifically, the position of the automobile in the to-be-processed image can be determined by identifying an automobile shape or an automobile profile. Then a target area image of the to-be-processed image is obtained according to the position. That is, after the position is obtained, a rectangular area may be drawn as the target area image according to the position, and the boundary of the rectangular area may be tangent to the automobile shape or the automobile profile, so that the target area image includes all the information of the automobile. Of course, it should be noted that if there are a plurality of automobiles in the to-be-processed image, then a plurality of target area images can be obtained for the same to-be-processed image, each target area image corresponding to one automobile. After that, each target area image is processed by the deep learning model to output the state parameter of the automobile in the target area image. Furthermore, the deep learning model includes, but is not limited to, a neural belief network model, a convolutional neural network model, and a recursive neural network model. Before processing the automobile image according to this embodiment, a deep learning network architecture for identifying and outputting the state parameter of the automobile in the image can also be pre-constructed, and training samples are obtained by means of collecting a large number of training images and annotating, for the constructed deep learning network architecture to learn and train, so as to obtain the deep learning model on which this embodiment is based.

Finally, the automobile image processing apparatus determines the automobile behavior in the to-be-processed image according to the state parameter. Specifically, the automobile behavior determined according to the state parameter includes one of the following: a braking behavior, a traveling behavior, a steering behavior, and a parking behavior.

Furthermore, in an optional implementation, after determining the automobile behavior in the to-be-processed image according to the state parameter, the method further includes: sending the automobile behavior in the obtained to-be-processed image to the self-driving device, for the self-driving device to adjust the self-driving strategy according to the automobile behavior. For example, when the automobile behavior of the automobile is determined to be a braking behavior, the self-driving device should also take a driving behavior, such as braking or detouring, to avoid a driving danger; when the automobile behavior of the automobile is determined to be a parking behavior, the self-driving device should take a driving behavior, such as detouring, to avoid a traffic safety hidden danger caused by a driver rushing out of the automobile.

Optionally, in this embodiment, the state parameter of the automobile in the to-be-processed image which is outputted from the deep learning model is used to indicate one or more of the following automobile states: a brake lamp state, a steering lamp state, a door state, a trunk door state, and a wheel pointing direction state.

The brake lamp state and the steering lamp state are used to indicate whether a brake lamp and a steering lamp are on or off, where the steering lamp state may be further divided into a left steering lamp state and a right steering lamp state. The door state and the trunk door state are used to indicate whether a door and a trunk door are open or closed; where the door state may be further divided into a left-front door state, a left-rear door state, a right-front door state, and a right-rear door state. Of course, the door state may also be divided into a left door state and a right door state depending on the automobile type. The wheel pointing direction state is used to indicate the orientation of a wheel, which generally refers to the orientation of a steering wheel, i.e., the orientation of a front wheel. By outputting the above state parameter(s), it is possible to effectively provide a determination basis for determining the braking behavior, the traveling behavior, the steering behavior, and the parking behavior of the automobile.

Further, for example, if the brake lamp state outputted from the deep learning model is on, then it can be determined that the automobile has a braking behavior; if the door state and/or the trunk door state outputted from the deep learning model are open, then it can be determined that the automobile has a parking behavior; if the wheel pointing direction state outputted from the deep learning model indicates that the orientation of a front wheel is not consistent with the orientation of a rear wheel, it is determined that the automobile has a steering behavior; and of course, if the deep learning model outputs other automobile states, then the automobile may be in a normal traveling behavior.

More preferably, the state parameter of the automobile in the to-be-processed image which is outputted from the deep learning model further includes: an automobile measurement size, and/or, a distance between the automobile and the collecting point for collecting the image of the automobile.

Specifically, in order to better determine the automobile behavior, the state parameter outputted from the deep learning model further includes the automobile measurement size and/or the distance between the automobile and the collecting point. These two behavior parameters can make the determined automobile behavior more accurate. For example, when the value of the distance between the automobile and the collecting point for collecting the image of the automobile is obtained as relatively small, it is determined that the automobile has a braking behavior.

Using the automobile image processing method, the to-be-processed image collected by the collecting point of automobile images is obtained, where the collecting point is provided on the self-driving device; the to-be-processed image is processed using the deep learning model, and the state parameter of the automobile in the to-be-processed image is outputted; and the automobile behavior in the to-be-processed image is determined according to the state parameter. Thus the to-be-processed image collected by the collecting point can be processed using the deep learning model to obtain the state parameter for determining the automobile behavior, and thus the automobile behavior can be obtained, thereby providing a foundation and a basis for the self-driving device to adjust the driving strategy according to the road condition.

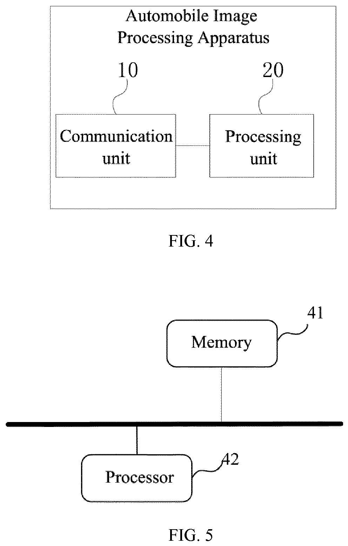

FIG. 4 is a schematic structural diagram of an automobile image processing apparatus according to a third embodiment of the present invention. As shown in FIG. 4, the automobile image processing apparatus includes:
a communication unit 10, configured to obtain a to-be-processed image collected by a collecting point of automobile images, where the collecting point is provided on a self-driving device; and
a processing unit 20, configured to process the to-be-processed image using a deep learning model, and output a state parameter of an automobile in the to-be-processed image; and further configured to determine an automobile behavior in the to-be-processed image according to the state parameter.

In an optional implementation, the processing unit 20 is specifically configured to:
determine a position of the automobile in the to-be-processed image;
obtain a target area image of the to-be-processed image according to the position; and
process the target area image using a deep learning model, and output a state parameter of the automobile in the target area image.

In an optional implementation, the state parameter of the automobile in the to-be-processed image which is outputted from the deep learning model is used to indicate one or more of the following automobile states:
a brake lamp state, a steering lamp state, a door state, a trunk door state, and a wheel pointing direction state.

In an optional implementation, the state parameter of the automobile in the to-be-processed image which is outputted from the deep learning model further includes: an automobile measurement size, and/or, a distance between the automobile and the collecting point for collecting the image of the automobile.

In an optional implementation, the automobile behavior determined according to the state parameter includes one of the following:
a braking behavior, a traveling behavior, a steering behavior, and a parking behavior.

In an optional implementation, the communication unit 10 is further configured to: after determining the automobile behavior in the to-be-processed image according to the state parameter, send the automobile behavior in the obtained to-be-processed image to the self-driving device, for the self-driving device to adjust the self-driving strategy according to the automobile behavior.

It will be apparent to those skilled in the art that, for convenience and brevity of description, the specific working process of the system described above and the corresponding beneficial effects will not be repeated here, and for details, please refer to the corresponding process in the foregoing method embodiments.

Using the automobile image processing apparatus provided by the third embodiment of the present invention, the to-be-processed image collected by the collecting point of automobile images is obtained, where the collecting point is provided on the self-driving device; the to-be-processed image is processed using the deep learning model, and the state parameter of the automobile in the to-be-processed image is outputted; and the automobile behavior in the to-be-processed image is determined according to the state parameter. Thus the to-be-processed image collected by the collecting point can be processed using the deep learning model to obtain the state parameter for determining the automobile behavior, and thus the automobile behavior can be obtained, thereby providing a foundation and a basis for the self-driving device to adjust the driving strategy according to the road condition.

FIG. 5 is a schematic diagram of a hardware structure of an automobile image processing apparatus. As shown in FIG. 5, the automobile image processing apparatus includes: a memory 41, a processor 42, and a computer program that is stored on the memory 41 and is executable on the processor 42, where the processor 42 executes the method of any one of the above embodiments when running the computer program.

The present invention also provides a readable storage medium, including a program that, when running on a terminal, causes the terminal to execute the method of any one of the above embodiments.

It will be appreciated by those of ordinary skill in the art that all or part of the steps to implement the above-described method embodiments may be accomplished by hardware related to program instructions. The aforementioned program may be stored in a computer readable storage medium. When the program is executed, the steps including those in the above-described method embodiments are performed. The foregoing storage medium includes various media that can store program codes, such as a ROM, a RAM, a magnetic disk, or an optical disc.

Finally, it should be noted that the above embodiments are merely intended to illustrate the technical solutions of the present invention, rather than limiting them. Although the present invention has been described in detail with reference to the foregoing embodiments, those of ordinary skill in the art will understand that it is still possible to modify the technical solutions described in the foregoing embodiments or to equivalently replace some or all of the technical features thereof. These modifications or substitutions do not preclude the nature of the respective technical solutions from the scope of the technical solutions of the embodiments of the present invention.

## Claims

1. An automobile image processing method, comprising:
obtaining (101) a to-be-processed image collected by a collecting point of automobile images, wherein the collecting point is provided on a self-driving device;
processing (102) the to-be-processed image using a deep learning model, and outputting a state parameter of an automobile in the to-be-processed image, wherein the state parameter is used to indicate one or more of the following automobile states: a brake lamp state, a steering lamp state, a door state, a trunk door state, a wheel pointing direction state, and a distance between the automobile and the collecting point of automobile images; and
determining (103) an automobile behavior in the to-be-processed image according to the state parameter, wherein the automobile behavior comprises one of the following: a braking behavior, a traveling behavior, a steering behavior, and a parking behavior;
**characterized in that**
the determining (103) the automobile behavior in the to-be-processed image according to the state parameter comprises:
determining that the automobile has a braking behavior when a value of the distance between the automobile and the collecting point of automobile images is relatively small; and
determining that the automobile has a steering behavior when the wheel pointing direction state indicates that an orientation of a front wheel is not consistent with an orientation of a rear wheel.

2. The automobile image processing method according to claim 1, wherein the processing (102) the to-be-processed image using a deep learning model, and outputting a state parameter of an automobile in the to-be-processed image comprises:
determining (202) a position of the automobile in the to-be-processed image;
obtaining (203) a target area image of the to-be-processed image according to the position; and
processing (204) the target area image using the deep learning model, and outputting the state parameter of the automobile in the target area image.

3. The automobile image processing method according to claim 2, wherein the state parameter of the automobile in the to-be-processed image which is outputted from the deep learning model further comprises: a measurement of a size of an automobile.

4. The automobile image processing method according to any one of claims 1 to 3, wherein after the determining (103) an automobile behavior in the to-be-processed image according to the state parameter, the method further comprises:
sending the automobile behavior in the obtained to-be-processed image to the self-driving device, for the self-driving device to adjust a self-driving strategy according to the automobile behavior.

5. An automobile image processing apparatus (1), comprising:
a communication unit (10), configured to obtain a to-be-processed image collected by a collecting point (3) of automobile images, wherein the collecting point (3) is provided on a self-driving device (2); and
a processing unit (20), configured to process the to-be-processed image using a deep learning model, and output a state parameter of an automobile in the to-be-processed image, wherein the state parameter is used to indicate one or more of the following automobile states: a brake lamp state, a steering lamp state, a door state, a trunk door state, and a wheel pointing direction state, and a distance between the automobile and the collecting point of automobile images,
the processing unit (20) is further configured to determine an automobile behavior in the to-be-processed image according to the state parameter, wherein the automobile behavior comprises one of the following: a braking behavior, a traveling behavior, a steering behavior, and a parking behavior, **characterized in that**
the processing unit (20) is further configured to determine that the automobile has a braking behavior when a value of the distance between the automobile and the collecting point of automobile images is relatively small; and
determine that the automobile has a steering behavior when the wheel pointing direction state indicates that an orientation of a front wheel is not consistent with an orientation of a rear wheel.

6. The automobile image processing apparatus (1) according to claim 5, wherein the processing unit (20) is specifically configured to:
determine a position of the automobile in the to-be-processed image;
obtain a target area image of the to-be-processed image according to the position; and
process the target area image using the deep learning model, and output the state parameter of the automobile in the target area image.

7. The automobile image processing apparatus (1) according to claim 6, wherein the state parameter of the automobile in the to-be-processed image which is outputted from the deep learning model further comprises: a measurement of a size of an automobile.

8. The automobile image processing apparatus (1) according to any one of claims 5 to 7, wherein the communication unit (10) is further configured to: after determining the automobile behavior in the to-be-processed image according to the state parameter, send the automobile behavior in the obtained to-be-processed image to the self-driving device (2), for the self-driving device (2) to adjust a self-driving strategy according to the automobile behavior.

9. A readable storage medium, comprising a program that, when running on a terminal, causes the terminal to execute the method according to any one of claims 1 to 4.

## Patentansprüche

1. Automobil-Bildverarbeitungsverfahren, umfassend:
Beschaffen (101) eines zu bearbeitenden Bildes, das von einer Sammelstelle für Automobilbilder gesammelt wird, wobei die Sammelstelle auf einem selbstfahrenden Gerät bereitgestellt ist;
Bearbeiten (102) des zu bearbeitenden Bildes unter Verwendung eines Deep-Learning-Modells und Ausgeben eines Zustandsparameters eines Automobils im zu bearbeitenden Bild, wobei der Zustandsparameter benutzt wird, einen oder mehrere der folgenden Automobilzustände anzugeben: einen Bremslichtzustand, einen Steuerungslichtzustand, einen Türzustand, einen Gepäckraumtürzustand, einen Radausrichtungszustand und einen Abstand zwischen dem Automobil und der Sammelstelle für Automobilbilder; und
Bestimmen (103) eines Automobilverhaltens im zu bearbeitenden Bild gemäß dem Zustandsparameter, wobei das Automobilverhalten eines der folgenden umfasst: ein Bremsverhalten, ein Fahrverhalten, ein Steuerungsverhalten und ein Parkverhalten;
**dadurch gekennzeichnet, dass** das Bestimmen (103) des Automobilverhaltens im zu bearbeitenden Bild gemäß dem Zustandsparameter Folgendes umfasst:
Bestimmen, dass das Automobil ein Bremsverhalten aufweist, wenn ein Wert des Abstands zwischen dem Automobil und der Sammelstelle für Automobilbilder relativ klein ist; und
Bestimmen, dass das Automobil ein Steuerungsverhalten aufweist, wenn der Radausrichtungszustand angibt, dass eine Orientierung eines Vorderrads nicht mit einer Orientierung eines Hinterrads konsistent ist.

2. Automobil-Bildverarbeitungsverfahren nach Anspruch 1, wobei das Bearbeiten (102) des zu bearbeitenden Bildes unter Verwendung eines Deep-Learning-Modells und das Ausgeben eines Zustandsparameters eines Automobils im zu bearbeitenden Bild Folgendes umfasst:
Bestimmen (202) einer Position des Automobils im zu bearbeitenden Bild;
Beschaffen (203) eines Zielbereichsbildes des zu bearbeitenden Bildes gemäß der Position; und
Bearbeiten (204) des Zielbereichsbildes unter Verwendung des Deep-Learning-Modells und Ausgeben des Zustandsparameters des Automobils im Zielbereichsbild.

3. Automobil-Bildverarbeitungsverfahren nach Anspruch 2, wobei der Zustandsparameter des Automobils im zu bearbeitenden Bild, der vom Deep-Learning-Modell ausgegeben wird, ferner Folgendes umfasst: eine Messung einer Größe eines Automobils.

4. Automobil-Bildverarbeitungsverfahren nach einem der Ansprüche 1 bis 3, wobei nach dem Bestimmen (103) eines Automobilverhaltens im zu bearbeitenden Bild gemäß dem Zustandsparameter das Verfahren ferner Folgendes umfasst:
Senden des Automobilverhaltens im beschafften zu bearbeitenden Bild an das selbstfahrende Gerät, damit das selbstfahrende Gerät eine Selbstfahrstrategie gemäß dem Automobilverhalten adjustiert.

5. Automobil-Bildverarbeitungsvorrichtung (1), umfassend:
eine Kommunikationseinheit (10) konfiguriert zum Beschaffen eines zu bearbeitenden Bildes, das von einer Sammelstelle (3) für Automobilbilder gesammelt wird, wobei die Sammelstelle (3) auf einem selbstfahrenden Gerät (2) bereitgestellt ist; und
eine Bearbeitungseinheit (20) konfiguriert zum Bearbeiten des zu bearbeitenden Bildes unter Verwendung eines Deep-Learning-Modells und Ausgeben eines Zustandsparameters eines Automobils im zu bearbeitenden Bild, wobei der Zustandsparameter benutzt wird, einen oder mehrere der folgenden Automobilzustände anzugeben: einen Bremslichtzustand, einen Steuerungslichtzustand, einen Türzustand, einen Gepäckraumtürzustand, und einen Radausrichtungszustand und einen Abstand zwischen dem Automobil und der Sammelstelle für Automobilbilder,
wobei die Bearbeitungseinheit (20) ferner konfiguriert ist zum Bestimmen eines Automobilverhaltens im zu bearbeitenden Bild gemäß dem Zustandsparameter, wobei das Automobilverhalten eines der folgenden umfasst: ein Bremsverhalten, ein Fahrverhalten, ein Steuerungsverhalten und ein Parkverhalten, **dadurch gekennzeichnet, dass**
wobei die Bearbeitungseinheit (20) ferner konfiguriert ist zum Bestimmen, dass das Automobil ein Bremsverhalten aufweist, wenn ein Wert des Abstands zwischen dem Automobil und der Sammelstelle für Automobilbilder relativ klein ist; und
Bestimmen, dass das Automobil ein Steuerungsverhalten aufweist, wenn der Radausrichtungszustand angibt, dass eine Orientierung eines Vorderrads nicht mit einer Orientierung eines Hinterrads konsistent ist.

6. Automobil-Bildverarbeitungsvorrichtung (1) nach Anspruch 5, wobei die Bearbeitungseinheit (20) spezifisch zu Folgendem konfiguriert ist:
Bestimmen einer Position des Automobils im zu bearbeitenden Bild;
Beschaffen eines Zielbereichsbildes des zu bearbeitenden Bildes gemäß der Position; und
Bearbeiten des Zielbereichsbildes unter Verwendung des Deep-Learning-Modells und Ausgeben des Zustandsparameters des Automobils im Zielbereichsbild.

7. Automobil-Bildverarbeitungsvorrichtung (1) nach Anspruch 6, wobei der Zustandsparameter des Automobils im zu bearbeitenden Bild, der vom Deep-Learning-Modell ausgegeben wird, ferner Folgendes umfasst: eine Messung einer Größe eines Automobils.

8. Automobil-Bildverarbeitungsvorrichtung (1) nach einem der Ansprüche 5 bis 7, wobei die Kommunikationseinheit (10) ferner zu Folgendem konfiguriert ist: nach dem Bestimmen des Automobilverhaltens im zu bearbeitenden Bild gemäß dem Zustandsparameter Senden des Automobilverhaltens im beschafften zu bearbeitenden Bild an das selbstfahrende Gerät (2), damit das selbstfahrende Gerät (2) eine Selbstfahrstrategie gemäß dem Automobilverhalten adjustiert.

9. Lesbares Speichermedium umfassend ein Programm, das, wenn es auf einem Endgerät läuft, das Endgerät veranlasst, das Verfahren nach einem der Ansprüche 1 bis 4 auszuführen.

## Revendications

1. Un procédé de traitement d'images d'automobile, comprenant :
l'obtention (101) d'une image à traiter recueillie par un point de recueil d'images d'automobile, où le point de recueil est installé sur un dispositif de conduite autonome,
le traitement (102) de l'image à traiter au moyen d'un modèle d'apprentissage profond, et la production en sortie d'un paramètre d'état d'une automobile dans l'image à traiter, où le paramètre d'état est utilisé de façon à indiquer un ou plusieurs des états d'automobile suivants : un état de feu de freinage, un état de feu de direction, un état de portière, un état de portière de coffre, un état de direction de pointage de roue et une distance entre l'automobile et le point de recueil d'images d'automobile, et
la détermination (103) d'un comportement d'automobile dans l'image à traiter en fonction du paramètre d'état, où le comportement d'automobile comprend un des comportements suivants : un comportement de freinage, un comportement de circulation, un comportement de braquage et un comportement de stationnement,
**caractérisé en ce que**
la détermination (103) du comportement d'automobile dans l'image à traiter en fonction du paramètre d'état comprend :
la détermination que l'automobile présente un comportement de freinage lorsqu'une valeur de la distance entre l'automobile et le point de recueil d'images d'automobile est relativement faible, et
la détermination que l'automobile présente un comportement de braquage lorsque l'état de direction de pointage de roue indique qu'une orientation d'une roue avant n'est pas cohérent avec une orientation d'une roue arrière.

2. Le procédé de traitement d'images d'automobile selon la Revendication 1, où le traitement (102) de l'image à traiter au moyen d'un modèle d'apprentissage profond et la production en sortie d'un paramètre d'état d'une automobile dans l'image à traiter comprend :
la détermination (202) d'une position de l'automobile dans l'image à traiter,
l'obtention (203) d'une image de zone cible de l'image à traiter en fonction de la position, et
le traitement (204) de l'image de zone cible au moyen du modèle d'apprentissage profond, et la production en sortie du paramètre d'état de l'automobile dans l'image de zone cible.

3. Le procédé de traitement d'images d'automobile selon la Revendication 2, où le paramètre d'état de l'automobile dans l'image à traiter qui est produite en sortie à partir du modèle d'apprentissage profond comprend en outre : une mesure d'une taille d'une automobile.

4. Le procédé de traitement d'images d'automobile selon l'une quelconque des Revendications 1 à 3, où après la détermination (103) d'un comportement d'automobile dans l'image à traiter en fonction du paramètre d'état, le procédé comprend en outre :
l'envoi du comportement d'automobile dans l'image à traiter obtenue au dispositif de conduite autonome, afin de permettre au dispositif de conduite autonome d'ajuster une stratégie de conduite autonome en fonction du comportement d'automobile.

5. Un appareil de traitement d'images d'automobile (1), comprenant :
une unité de communication (10) configurée de façon à obtenir une image à traiter recueillie par un point de recueil (3) d'images d'automobile, où le point de recueil (3) est installé sur un dispositif de conduite autonome (2), et
une unité de traitement (20) configurée de façon à traiter l'image à traiter au moyen d'un modèle d'apprentissage profond et à produire en sortie un paramètre d'état d'une automobile dans l'image à traiter, où le paramètre d'état est utilisé de façon à indiquer un ou plusieurs des états d'automobile suivants : un état de feu de freinage, un état de feu de direction, un état de portière, un état de portière de coffre et un état de direction de pointage de roue, et une distance entre l'automobile et le point de recueil d'images d'automobile,
l'unité de traitement (20) est configurée en outre de façon à déterminer un comportement d'automobile dans l'image à traiter en fonction du paramètre d'état, où le comportement d'automobile comprend un des comportements suivants : un comportement de freinage, un comportement de circulation, un comportement de braquage et un comportement de stationnement,
**caractérisé en ce que**
l'unité de traitement (20) est configurée en outre de façon à déterminer que l'automobile présente un comportement de freinage lorsqu'une valeur de la distance entre l'automobile et le point de recueil d'images d'automobile est relativement faible, et
déterminer que l'automobile présente un comportement de braquage lorsque l'état de direction de pointage de roue indique qu'une orientation d'une roue avant n'est pas cohérente avec une orientation d'une roue arrière.

6. L'appareil de traitement d'images d'automobile (1) selon la Revendication 5, où l'unité de traitement (20) est spécifiquement configurée de façon à :
déterminer une position de l'automobile dans l'image à traiter,
obtenir une image de zone cible de l'image à traiter en fonction de la position, et
traiter l'image de zone cible au moyen du modèle d'apprentissage profond, et produire en sortie le paramètre d'état de l'automobile dans l'image de zone cible.

7. L'appareil de traitement d'images d'automobile (1) selon la Revendication 6, où le paramètre d'état de l'automobile dans l'image à traiter qui est produite en sortie à partir du modèle d'apprentissage profond comprend en outre : une mesure d'une taille d'une automobile.

8. L'appareil de traitement d'images d'automobile (1) selon l'une quelconque des Revendications 5 à 7, où l'unité de communication (10) est configurée en outre de façon à : après la détermination du comportement d'automobile dans l'image à traiter en fonction du paramètre d'état, envoyer le comportement d'automobile dans l'image à traiter obtenue au dispositif de conduite autonome (2), afin de permettre au dispositif de conduite autonome (2) d'ajuster une stratégie de conduite autonome en fonction du comportement d'automobile.

9. Un support à mémoire lisible, comprenant un programme qui, lorsqu'il est exécuté sur un terminal, amène le terminal à exécuter le procédé selon l'une quelconque des Revendications 1 à 4.
